# EUROPÄISCHE PATENTANMELDUNG

(11) **EP 4 733 055 A2**
(43) Veröffentlichungstag der Anmeldung: **29.04.2026**
(21) Anmeldenummer: 25197262.6
(22) Anmeldetag: 21.08.2025
(51) Int. Cl.: B29D 30/38, B29D 30/42

(54) **SPLEISSEINRICHTUNG ZUM SPLEISSEN VON BANDSTREIFEN, INSBESONDERE KLEBRIGEN CORDBANDSTREIFEN**

(30) Priorität: 23.10.2024 DE 102024130831
(71) Anmelder: Fischer TireTech Germany GmbH, 96224 Burgkunstadt (DE)
(72) Erfinder: Schmidt, Frank, 95349 Thurnau (DE)
(74) Vertreter: Lindner Blaumeier Patent- und Rechtsanwälte

(57) **Zusammenfassung**

Spleißeinrichtung zum Spleißen von Bandstreifen (9), insbesondere klebrigen Cordbandstreifen, umfassend
- ein einen ersten Bandabschnitt (9) transportierendes Förderband (2),
- eine Spleißvorrichtung (3) umfassend eine Spleißeinheit (4), in welcher eine vorlaufende Kante (22) eines über das Förderband (2) herangeförderten Bandstreifens (9) mit einer nachlaufenden Kante (18) eines zuvor gespleißten Bandstreifens (9) zur Bildung eines gespleißten Bands (11) verspleißt wird, sowie umfassend ein Transportband (5) zum Transportieren des gespleißten Bands,
- sowie eine Sensoreinrichtung zur Erfassung einer Position zumindest des herangeförderten Bandstreifens (9), basierend auf welcher der herangeförderte Bandstreifen (9) und das gespleißte Band (11) zueinander mittels einer Ausrichteinrichtung ausrichtbar sind, wobei die Sensoreinrichtung eine an einer Längsposition des Förderbands (2) angeordnete erste Sensorvorrichtung (13), die zur Erfassung der Position einer Längskante (20) des Bandstreifens (9) eingerichtet ist, aufweist, wobei eine Steuerungseinrichtung (15) vorgesehen ist, die zur Ermittlung eines lateralen Versatzes der erfassten Position der Längskante (20) mit der Position der Längskante (21) des gespleißten Bands (11) eingerichtet ist, und über die bei Ermittlung eines Versatzes ein Antriebsmittel (16) der quer zur Förderrichtung des Förderbands (2) verschiebbar gelagerten Spließvorrichtung (3) zur fluchtenden Ausrichtung der beiden Längskanten (20, 21) ansteuerbar ist.

## Beschreibung

Die Erfindung betrifft eine Spleißeinrichtung zum Spleißen von Bandstreifen, insbesondere klebrigen Cordbandstreifen, umfassend
- ein einen ersten Bandabschnitt transportierendes Förderband,
- eine Spleißvorrichtung umfassend eine Spleißeinheit, in welcher eine vorlaufende Kante eines über das Förderband herangeförderten Bandstreifens mit einer nachlaufenden Kante eines zuvor gespleißten Bandstreifens zur Bildung eines gespleißten Bands verspleißt wird, sowie umfassend ein Transportband zum Transportieren des gespleißten Bands,
- sowie eine Sensoreinrichtung zur Erfassung einer Position zumindest des herangeförderten Bandstreifens, basierend auf welcher der herangeförderte Bandstreifen und das gespleißte Band zueinander mittels einer Ausrichteinrichtung ausrichtbar sind.

Eine solche Spleißeinrichtung, wie sie beispielsweise aus DE 10 2017 120 262 B4 bekannt ist, wird beispielsweise in der Reifenindustrie verwendet, um aus einzelnen Bandstreifen aus einem klebrigen Cordbandmaterial ein Endlosband herzustellen, wozu die einzelnen Bandstreifen längs einer Kante mittels einer Spleißvorrichtung miteinander verspleißt werden. Eine solche Spleißvorrichtung weist beispielsweise ein Spleißwerkzeug mittels Spleißkopf bzw. mehrerer Spleißköpfe auf. Dabei wird der Spleißkopf bzw. die Spleißköpfe den zuvor zueinander positionierten Kanten von oben zugeführt. Nach dem jeweiligen Aufsetzen der Spleißköpfe wird linear, im Verlauf der Spleißlinie, im angedrückten Zustand über das Bandmaterial in Richtung zu den seitlichen Bandkanten über das Bandmaterial gezogen. Die Spleißköpfe können lose laufen oder angetrieben sein. Bei dem Ziehen über das Bandmaterial wird dieses verdichtet und somit verspleißt. Auf diese Weise kann durch Aneinanderspleißen einer Vielzahl einzelner Bandstreifen ein Endlosband hergestellt werden, wie es beispielsweise zur Herstellung von Gürtelstreifen eines Reifens benötigt wird.

Die einzelnen Bandstreifen werden zuvor in einer Schneideinrichtung von einem aus einer Abwickelstation, in der das zu einer Rolle gewickelte Ausgangsband aufgenommen ist, kommenden Cordband abgeschnitten und über ein Förderband zur Spleißvorrichtung transportiert, wobei die Geometrie der einzelnen Bandabschnitte regelmäßig eine parallelogrammartige Form aufweisen, also eine vorlaufende Spitze und eine nachlaufenden Spitze sowie schräg zur Förderrichtung stehende vorlaufende eine nachlaufende Kanten sowie zwei parallel zur Förderrichtung verlaufende Längskanten aufweist. Die in der Schneideinrichtung geschnittenen Bandstreifen werden nach dem Schneiden von einem Förderband übernommen, mittels dem sie zur Spleißvorrichtung transportiert werden, wo eine vorlaufende Kante eines herangeförderten Bandabschnitt mit einer nachlaufenden Kante eines zuvor an das Endlosband angespleißten Bandabschnitts verspleißt wird. Hierbei ist es wichtig, dass die miteinander zu verspleißenden Bandstreifen korrekt zueinander positioniert sind, wobei insbesondere die Längskanten miteinander fluchten sollen, damit das fertige Endlosband keine seitlichen Kantenversatz aufweist. Um einen solchen Versatz zu vermeiden, ist bei der aus DE 10 2017 120 262 B4 bekannten Spleißeinrichtung eine Sensoreinrichtung vorgesehen, die es ermöglicht, eine Information über die Position des herangeförderten Streifens zu erfassen und zu ermitteln, wie eine der beiden Längskanten des herangeförderten Bandstreifens positioniert ist und inwieweit ein etwaiger Versatz der Längskante zu der Längskante des zuvor angespleißten Bandstreifens gegeben ist. Wird ein solcher Versatz ermittelt, so wird bei der bekannten Spleißeinrichtung mittels einer Ausrichteinrichtung, die eine längs des Förderbands verfahrbare Klemmeinrichtung aufweist, der herangeförderte Bandstreifen an seiner Längskante gegriffen und während des Transports mittels der dabei mitfahrenden Ausrichteinrichtung lateral in die gewünschte Position gezogen, in der die Längskante mit der des zuvor gespleißten Bandabschnitt bestmöglich fluchtet. Wenngleich sich mit einer solchen Ausrichteinrichtung der herangeförderte Bandstreifen gut ausrichten lässt, ist eine solche Ausrichteinrichtung jedoch relativ komplex im Aufbau sowie im Betrieb.

Eine alternative Möglichkeit zur Ausrichtung eines herangeförderten Bandstreifens ist aus DE 601 01 962 T2 bekannt. Dort wird mittels einer Sensoreinrichtung vor der Übergabe eines geschnittenen Bandstreifens auf die zur Spleißvorrichtung führende Förderrichtung eine Positionsinformation zum Bandstreifen und basierend darauf die Mittellinie des Bandstreifens erfasst, welche bezüglich der Mittellinie des zuvor gespleißten Bandstreifens, also des Endlosbands, ausgerichtet werden soll. Die Ausrichtung erfolgt durch Verschwenken der Fördereinrichtung, die mit ihrem benachbart zur Spleißvorrichtung befindlichen Ende verschwenkt wird, sodass mit in der Schwenkpositionen die Übergabeposition des herangeförderten Bandstreifens angepasst wird und die Mittellinien fluchten. Zusätzlich kann auch der Spleißtisch, auf dem das Ende des zuvor gespleißten Endlosband liegt, lateral verschoben werden. Die Positionserfassung erfolgt weit vor der eigentlichen Spleißebene, was einer exakten Ausrichtung nicht zuträglich ist, da sich über die längere Förderstrecke auf dem Förderband noch etwaige Positionsänderungen ergeben können, wie auch die Position der Mittellinie, bezüglich welcher die Ausrichtung erfolgt, nicht gemessen, sondern nur errechnet wird, was ebenfalls einer exakten Ausrichtung nicht zuträglich ist.

Der Erfindung liegt das Problem zugrunde, eine verbesserte Spleißeinrichtung anzugeben.

Zur Lösung des Problems ist bei einer Spleißeinrichtung der eingangs genannten Art erfindungsgemäß vorgesehen, dass die Sensoreinrichtung eine an einer Längsposition des Förderbands angeordnete erste Sensorvorrichtung, die zur Erfassung der Position einer Längskante des Bandstreifens eingerichtet ist, aufweist, wobei eine Steuerungseinrichtung vorgesehen ist, die zur Ermittlung eines lateralen Versatzes der erfassten Position der Längskante mit der Position der Längskante des gespleißten Bands eingerichtet ist, und über die bei Ermittlung eines Versatzes ein Antriebsmittel der quer zur Förderrichtung des Förderbands verschiebbar gelagerten Spleißvorrichtung zur fluchtenden Ausrichtung der beiden Längskanten ansteuerbar ist.

Bei der erfindungsgemäßen Spleißeinrichtung ist eine Sensoreinrichtung vorgesehen, die eine erste Sensorvorrichtung aufweist, die an einer Längsposition des Förderbands angeordnet ist. Mittels dieser ersten Sensorvorrichtung wird exakt die Position einer Längskante des Bandstreifens in Bezug zu einer Referenzkante erfasst, also die laterale Position der Längskante, wie sie auf der Vordereinrichtung gegeben ist. Es erfolgt also eine echte Kantenerfassung dieser Längskante, bezüglich welcher die Ausrichtung erfolgt, d. h., dass eine Ausrichtung der Längskante des Bandabschnitts und der Längskante des gespleißten Bands zueinander erfolgt. Die Sensoreinrichtung kommuniziert mit einer Steuerungseinrichtung, die in der Lage ist, einen etwaigen lateralen Versatz der erfassten Position der Längskante des herangeförderten Bandstreifens mit der bekannten Position der Längskante des gespleißten Bands zu bestimmen. D. h., dass ein tatsächlicher Seitenversatz zwischen beiden Längskanten ermittelt wird. Ist ein solcher Versatz gegeben, so wird über die Steuerungseinrichtungen ein Antriebsmittel angesteuert, über welches die Spleißvorrichtung quer zur Förderrichtung des Förderbands verschoben wird, derart, dass die beiden Längskanten miteinander fluchten. D. h., dass erfindungsgemäß das Ende des gespleißten Bands, das auf der Spleißvorrichtung ruht, bezüglich des herangeförderten Bandstreifens ausgerichtet wird, respektive die Längskante des gespleißten Bands bezüglich der Längskante des herangeförderten Bandstreifens ausgerichtet wird. Da die Erfassung der Position der Längskante des herangeförderten Streifens auf dem Förderband selbst erfolgt, also kurz vor der eigentlichen Übergabe des Bandstreifens auf die Spleißvorrichtung, ist die tatsächliche Lage, wie sie die Längskante quasi beim Verspleißen aufweist, bekannt, sodass eine optimale Kantenausrichtung in der Spleißebene möglich ist. Den auf der kurzen Förderstrecke vom Erfassungsort zum Spleißort ergeben sich keine nennenswerten Positionsänderungen hinsichtlich der Kantenlage, sodass basierend auf dieser Positionsinformation eine optimale Ausrichtung der Längskante des gespleißten Endlosband erfolgen kann. Hierzu ist die Spleißvorrichtung selber geringfügig lateral, also quer zur Förderrichtung zu bewegen, d. h., dass die Spleißvorrichtung selbst die Ausrichteinrichtung darstellt. Da das Bandende positionsfest auf der Spleißvorrichtung ruht, wird folglich dieses positionsfeste, sich während des Aussichtsvorgangs nicht bewegende Bandende ausgerichtet, was eine äußerst exakte Ausrichtung ermöglicht, da hierbei eben nur eine Querverschiebung erfolgt, jedoch keine eigene Bewegung des Bands.

Die erfindungsgemäße Bestimmung der Längskantenposition des herangeförderten Bands an oder auf der Förderrichtung selbst, also kurz vor dem eigentlichen Spleißort, sowie die Ausrichtung des sich nicht selbst bewegenden Bandendes des Endlosbands und damit dessen Längskante bezüglich der sich bewegenden Längskante des herangeförderten Streifens durch einfaches Verschieben der Spleißvorrichtung erlaubt eine wesentlich bessere Ausrichtung der Längskanten zueinander, die nach erfolgtem Spleißen bestmöglich mit einander fluchten.

In Weiterbildung der Erfindung kann vorgesehen sein, dass die Sensoreinrichtung eine zweite Sensorvorrichtung umfasst, die an einer der ersten Sensorvorrichtung in Förderrichtung nachgeschalteten Längsposition des Förderbands benachbart zum Ende des Förderbands angeordnet ist und die ebenfalls zur Erfassung der Position einer Längskante des Bandstreifens eingerichtet ist, wobei die Steuerungseinrichtung zur Ermittlung eines lateralen Versatzes der über die zweite Sensorvorrichtung erfassten Position der Längskante mit der Position der Längskante des gespleißten Bands eingerichtet und zur Ansteuerung des Antriebsmittels bei Ermittlung eines Versatzes eingerichtet ist. Die Sensoreinrichtung umfasst demnach eine zweite Sensorvorrichtung, die in Förderrichtung des Förderbands gesehen näher zur Spleißvorrichtung positioniertes, nämlich benachbart zum Ende des Förderbands, also nahezu unmittelbar vor der Übergabe des Bandstreifens an die Spleißvorrichtung. Mittels dieser zweiten Sensorvorrichtung wird erneut die Position der Längskante des herangeförderten Bandstreifens erfasst, wobei diese Positionsinformation der Steuerungseinrichtungen gegeben wird, die basierend auf dieser Information erneut einen etwaigen Versatz ermittelt. Es erfolgt also an zwei versetzten Positionen eine Bestimmung der ist-Position der Längskante des herangeförderten Bandstreifens. Dies führt dazu, dass quasi ein 2-stufiges Ausrichten möglich ist. Sobald die Position über die erste Sensorvorrichtung erfasst wurde, kann die Steuerungseinrichtungen nach Ermittlung eines etwaigen Versatzes unmittelbar das Antriebsmittel ansteuern und die Spleißvorrichtung lateral verschieben, um den Versatz auszugleichen. Hierüber kann also eine Art Vorsteuerung der Spleißvorrichtung erfolgen, die basierend auf dieser ersten Positionserfassung in eine ausgerichtete erste Position bewegt wird. Wird mit der zweiten Sensorvorrichtung eine weitere Positionsinformation erfasst, so kann diese der ersten Positionsinformation, die über die erste Sensorvorrichtung erfasst wurde, entsprechen. Dies würde dazu führen, dass seitens der Steuerungseinrichtung kein Versatz zwischen der zweiten Position und der Aussichtposition der Spleißvorrichtung ermittelt wird, da sich die Position der Längskante des herangeförderten Bandstreifens nicht geändert hat und die Längskante des Endes des gespleißten Bands exakt mit dieser Position fluchtet. Sollte jedoch die zweite Positionsinformation einen geringfügigen Positionsunterschied zur ersten Längskantenpositionsinformation anzeigen, so kann dieser dann geringfügige Versatz dieser zweiten Position zur ist-Position der Längskante auf der Spleißvorrichtung, die der ersten Längskantenposition entspricht, unmittelbar erfasst werden und sofort eine minimale weitere Korrektur der Spleißvorrichtung durch Ansteuern der Antriebsmittel über die Steuerungseinrichtung erfolgen. In diesem Fall erfolgt also eine Nachkorrektur. Da diese zweite Position quasi unmittelbar vor der Übergabe erfasst wird, und da eine etwaige Positionsdifferenz nur minimal ist, also im Millimeterbereich liegt, kann die Korrektur der Spleißvorrichtungsposition unmittelbar und in kürzester Zeit erfolgen, sodass die Position korrigiert ist, wenn die Übergabe des herangeförderten Bandstreifens auf die Spleißvorrichtung erfolgt.

Die Position der Längskante des Endes des gespleißten Bands ist seitens der Steuerungseinrichtungen bekannt, da sie der Position der erfassten Längskante des im vorherigen Zyklus angespleißten Bandstreifens, der vorher ja als herangeförderte Bandstreifen in seiner Längskantenposition erfasst wurde, entspricht. Eine separate Erfassung der Längskantenposition des gespleißten Bandstreifens ist daher nicht unbedingt erforderlich. Gleichwohl kann es zur weiteren Erhöhung der Positionsgenauigkeit respektive zu Kontrollzwecken zweckmäßig sein, auch diesbezüglich eine Informationserfassung vorzusehen. Hierzu kann vorgesehen sein, dass eine weitere Sensoreinrichtung zur Erfassung einer Position des gespleißten Bandstreifens vorgesehen ist, die eine an einer Längsposition des Transportbands angeordnete weitere Sensorvorrichtung, die zur Erfassung der Position einer Längskante des gespleißten Bandstreifens eingerichtet ist, umfasst, wobei die Steuerungseinrichtung zur Ermittlung des lateralen Versatzes unter Berücksichtigung der erfassten Position der Längskante des gespleißten Bands eingerichtet ist. Über diese weitere Sensoreinrichtung respektive die dem Transportband zugeordnete weitere Sensorvorrichtung wird folglich die Position der Längskante des gespleißten Bandstreifens erfasst, also die tatsächliche ist-Position. Die Steuerungseinrichtungen ermittelt nun einen etwaigen Versatz bezüglich der ersten Positionsinformation wie auch, sofern vorgesehen, der zweiten Positionsinformation zur Längskante des herangeförderten Bands unter Berücksichtigung der ist-Positionsinformation zur Längskante des gespleißten Bands. Es liegen also für eine Versatzermittlung stets tatsächliche Positionsinformationen, die unmittelbar über die entsprechenden Sensorvorrichtungen erfasst wurden, vor, sodass eine höchst präzise Versatzermittlung und damit auch Ausrichtbewegung erfolgen kann.

Dabei kann die erste und/oder die zweite und/oder die weitere Sensorvorrichtung zur Erfassung der jeweiligen Längskantenposition wenigstens einen optischen Sensor in Form eines Zeilensensors oder einer Kamera oder eines Lasersensor umfassen. Ein solches optisches System erlaubt eine hochgenaue Erfassung der Kantenposition durch entsprechende Auswertung der Sensorsignale oder der aufgenommenen Bilder, wobei der Signalverlauf respektive die Bildinhalte stets hochgenaue die Position der Längskante anzeigen, was mittels einer geeigneten Auswertesoftware seitens der Steuerungseinrichtung erfasst werden kann. Die jeweiligen Sensoren befinden sich vertikal oberhalb des Förderbands, auf dem der Bandstreifen aufliegt. Natürlich können auch andere als die genannten Sensoren verwendet werden, solange sie eine genaue Kantenerfassung erlauben.

In Weiterbildung der Erfindung kann die erste Sensorvorrichtung einen Sensor zur Erfassung der vorlaufenden Kante des herangeförderten Bandstreifens umfassen. Mittels dieses Sensors wird die in den Erfassungsbereich einlaufende, schräg zur Förderrichtung verlaufende vorlaufende Kante des herangeförderten Bandstreifens erfasst. Dieses Signal kann seitens der Steuerungseinrichtung als Triggersignal für den Beginn der anstehenden Ausrichtbewegung verwendet werden. Dieser Sensor liefert sein Signal geringfügig zeitlich vor dem Signal der ersten Sensorvorrichtung, sodass die Steuerungseinrichtungen mit Eingang dieses Signals die Ausrichtkomponenten bereits vorsteuern kann und dann, wenn die erste Sensorvorrichtung ihr Signal liefert und unmittelbar daraufhin ein etwaiger Versatz ermittelt ist, die entsprechenden Komponenten, also etwa die Antriebsmittel, unmittelbar betriebsbereit sind und den Ausrichtsvorgang durchführen können.

Wie beschrieben, erfolgt die Ausrichtung durch eine Positionsänderung der Spleißvorrichtung und mit ihr des auf ihr ruhenden Endes des gespleißten Bands. Für eine entsprechende der Schiebebewegung ist die Spleißvorrichtung zweckmäßigerweise über Linearführungsmittel verschiebbar gelagert. Die Spleißvorrichtung ist also nicht positionsfest bodenseitig montiert, sondern über entsprechende Linearführungsmittel quer zur Förderrichtung des Förderbands verschiebbar. Dabei können die Linearführungsmittel beispielsweise an der Spleißvorrichtung vorgesehene Rollen, die in positionsfesten Rollenführungen laufen, umfassen. Es ist also eine Rollenlagerung und -führung vorgesehen, über die die Spleißvorrichtung beweglich gelagert ist. Dabei sind bereits zwei solcher Linearführungsmittel respektive Rollenführungen und zugeordnete Rollen ausreichend, um die Spleißvorrichtung exakt zu führen. Zum Bewegen ist ein oder sind mehrere Antriebsmotore vorgesehen, die unterschiedliche Antriebselemente wie Rollen, Spindeln oder Riemen antreiben, über welche die Spleißvorrichtung längs der Linearführungsmittel bewegt wird.

Dabei kann eine positionsfeste Lagerplatte vorgesehen sein, an der die Rollenführungen vorgesehen sind. Diese Lagerplatte ist bodenseitig oder an einem entsprechenden Festgestell vorgesehen, sie trägt die Rollenführungen. Alternativ ist es auch denkbar, die Rollenführungen unmittelbar bodenseitig zu befestigen. Bei den Rollenführungen handelt es sich um entsprechende Führungsschienen, auf denen oder in denen die Rollen entsprechend geführt sind und laufen.

In einer zweckmäßigen Weiterbildung der Erfindung kann vorgesehen sein, dass die Spleißvorrichtung zusätzlich um einen Winkel von +/-3°, insbesondere von maximal +/- 2° und vorzugsweise von maximal +/- 1° aus einer mit der Förderrichtung fluchtenden Grundposition verschwenkbar ist. Demgemäß ist die Spleißvorrichtung nicht nur exakt linear und exakt quer zur Förderrichtung des Förderbands verschiebbar, sondern kann bei Bedarf um einen minimalen Winkel verschwenkt werden. Hierüber ist es beispielsweise möglich, den Verlauf eines zwischen der nachlaufenden Kante des Endes des gespleißten Bandstreifens und der vorlaufenden Kante des herangeförderten Bandstreifens gegebenen Spalts einzustellen. Idealerweise ergibt sich ein sich marginal von einer Längsseite zur anderen Längsseite öffnender Spalt, d. h., dass die beiden Bandstreifen idealerweise an einem Kantenende aneinander anliegen und sich dann ein nur um wenige Bogenminuten öffnender Spalt zum anderen Kantenende ausbildet. Dieser Spalt wird natürlich beim Spleißen geschlossen, wobei ein solcher Spalt oder eine solche Spaltgeometrie für einen homogenen Spleiß über die gesamte Spleißlänge von Vorteil ist. Der Verlauf der jeweiligen Kante kann beispielsweise mittels der ersten Sensorvorrichtung erfasst werden, da mittels dieser neben der Position der Längskante natürlich auch über eine gewisse Länge die jeweils vorlaufende und nachlaufenden Kante des herangeförderten Randabschnitts erfasst wird, sodass deren Verlauf aus den Informationen der ersten Sensorvorrichtung seitens der Steuerungseinrichtung ermittelt werden kann.

Soll eine solche geringe Schwenkmöglichkeit realisiert werden, so sind besonders bevorzugt die Linearführungsmittel zu Ermöglichung der Verschwenkung eingerichtet. D. h., dass die Linearführungsmittel eine entsprechende marginale Verschwenkung erlauben, d. h., dass beispielsweise die in den Rollenführungen laufenden Rollen dort derart mit einer gewissen Toleranz geführt sind, dass eine Verststellung um wenige Bogenminuten möglich ist.

Die Antriebsmittel selbst umfassen zweckmäßiger Weise einen Antriebsmotor, der mit einem Rahmengestell der Spleißvorrichtung verbunden ist. Ein solcher Antriebsmotor, bei dem es sich bevorzugt um einen Servomotor handelt, ist so angeordnet, dass er quasi, in Förderrichtung gesehen, seitlich mittig am Rahmengestell angebunden ist, sodass eine gleichmäßige Einleitung des Schiebemoments in das Rahmengestell und damit die Spleißvorrichtung selbst erfolgt und diese homogen und ohne irgendein Torsionsmoment über die Linearführungsmittel linear verschoben wird.

Eine Alternative sieht hierzu vor, dass die Antriebsmittel zwei separat ansteuerbare Antriebsmotor umfassen, die beide mit einem Rahmengestell der Spleißvorrichtung verbunden sind, wobei beide Antriebsmotor in Förderrichtung versetzt zueinander angeordnet sind. Über eine solche Anordnung ist einerseits eine exakte lineare Verschiebung möglich, da beide Antriebsmotore natürlich vollständig synchron angesteuert werden können. Andererseits ist hierüber auch eine marginale Verschwenkung um wenige Bogenminuten denkbar, indem beide Antriebsmotore unterschiedlich angesteuert werden, sodass es zu einer Verdrehung um eine Vertikalachse kommt.

Neben der Spleißeinrichtung selbst betrifft die Erfindung ferner ein Verfahren zum Betrieb einer Spleißeinrichtung zum Spleißen von Bandstreifen, insbesondere klebrigen Cordbandstreifen, wobei die Spleißeinrichtung umfasst:
- ein einen ersten Bandabschnitt transportierendes Förderband,
- eine Spleißvorrichtung umfassend eine Spleißeinheit, in welcher eine vorlaufende Kante eines über das Förderband herangeförderten Bandstreifens mit einer nachlaufenden Kante eines zuvor gespleißten Bandstreifens zur Bildung eines gespleißten Bands verspleißt wird, sowie umfassend ein Transportband zum Transportieren des gespleißten Bands,
- sowie eine Sensoreinrichtung zur Erfassung einer Position zumindest des herangeförderten Bandstreifens, worauf basierend der herangeförderte Bandstreifen und das gespleißte Band zueinander mittels einer Ausrichteinrichtung ausgerichtet wird

Dieses Verfahren zeichnet sich dadurch aus, dass die Sensoreinrichtung eine an einer Längsposition des Förderbands angeordnete erste Sensorvorrichtung aufweist, mittels der die Position einer Längskante des Bandstreifens erfasst wird, wobei mittels einer Steuerungseinrichtung ein lateraler Versatz der erfassten Position der Längskante mit der Position der Längskante des gespleißten Bands ermittelt wird und über die Steuerungseinrichtung bei Ermittlung eines Versatzes ein Antriebsmittel der quer zur Förderrichtung des Förderbands verschiebbar gelagerten Spließvorrichtung zur fluchtenden Ausrichtung der beiden Längskanten angesteuert und die Spließvorrichtung zum Ausgleich des Versatzes verschoben wird.

Weiterhin kann vorgesehen sein, dass mittels einer zweiten Sensorvorrichtung, die an einer der ersten Sensorvorrichtung in Förderrichtung nachgeschalteten Längsposition des Förderbands benachbart zum Ende des Förderbands angeordnet ist, ebenfalls die Position der Längskante des Bandstreifens erfasst wird, wobei mittels der Steuerungseinrichtung der laterale Versatz anhand der über die zweite Sensorvorrichtung erfassten Position der Längskante ermittelt wird.

Mittels einer weiteren Sensorvorrichtung, die an einer Längsposition des Transportbands angeordnet ist, kann ferner eine Position des gespleißten Bandstreifens erfasst werden, wobei die Steuerungseinrichtung den lateralen Versatz unter Berücksichtigung der erfassten Position der Längskante des gespleißten Bands ermittelt.

Dabei kann zur Erfassung der jeweiligen Längskantenposition wenigstens ein optischer Sensor in Form eines Zeilensensors oder einer Kamera oder eines Lasersensor verwendet werden, wobei die Aufzählung nicht abschließend ist, d. h., dass auch andere Sensoren, die eine exakte Kantenposition erlauben, verwendet werden können.

In Weiterbildung der Erfindung kann mittels eines Sensors der ersten Sensorvorrichtung die vorlaufende Kante des herangeförderten Bandstreifens erfasst werden.

Ferner ist es denkbar, dass zum Ausgleich eines Versatzes die Spleißvorrichtung linear verschoben und/oder um einen Winkel von +/-3°, insbesondere von maximal +/- 2° und vorzugsweise von maximal +/- 1° aus einer mit der Förderrichtung fluchtenden Grundposition verschwenkt wird.

Als Antriebsmittel können schließlich ein oder zwei separat ansteuerbare Antriebsmotore, insbesondere Servomotore verwendet werden.

Sämtliche Einzelheiten, Merkmale und Vorteile, die vorstehend zur Spleißeinrichtung erwähnt wurden, gelten gleichermaßen auch für das erfindungsgemäße Verfahren, soweit zweckmäßig.

Weitere Vorteile und Einzelheiten der vorliegenden Erfindung ergeben sich aus den im folgenden beschriebenen Ausführungsbeispielen sowie anhand der Zeichnung. Dabei zeigen:
- Fig. 1: eine Prinzipdarstellung einer erfindungsgemäßen Spleißeinrichtung,
- Fig. 2-5: Prinzipdarstellungen zu Erläuterung des Transport- und Spleißvorgangs,
- Fig. 6: eine Prinzipdarstellung der Spleißeinrichtung in einer Seitenansicht unter Darstellung der ersten, der zweiten und der weiteren Sensorvorrichtung,
- Fig. 7: eine Aufsicht auf die Anordnung aus Figur 6,
- Fig. 8: eine detailliertere Seitenansicht der Spleißvorrichtung der erfindungsgemäßen Spleißeinrichtung,
- Fig. 9: eine Aufsicht auf die Spleißvorrichtung aus Figur 8,
- Fig. 10: eine Vorderseitenansicht, gesehen gegen die Förderrichtung, der Spleißvorrichtung aus Figur 8,
- Fig. 11: eine Prinzipdarstellung der ersten Sensorvorrichtung mit einem Sensor für den Bewegungstartvorgang der Ausrichtung und einem ersten Sensor zur Fassung der Längskantenposition des Bandabschnitts,
- Fig. 12: eine Prinzipdarstellung der Ausrichtung der Spleißvorrichtung mit einem Antriebsmittel umfassend einen Antriebsmotor,
- Fig. 13: eine Prinzipdarstellung der Ausrichtung der Spleißvorrichtung mit einem Antriebsmittel umfassend zwei Antriebsmotore, und
- Fig. 14: eine Prinzipdarstellung eines Layouts einer kompletten Vorrichtung zur Herstellung des Endlosbands.

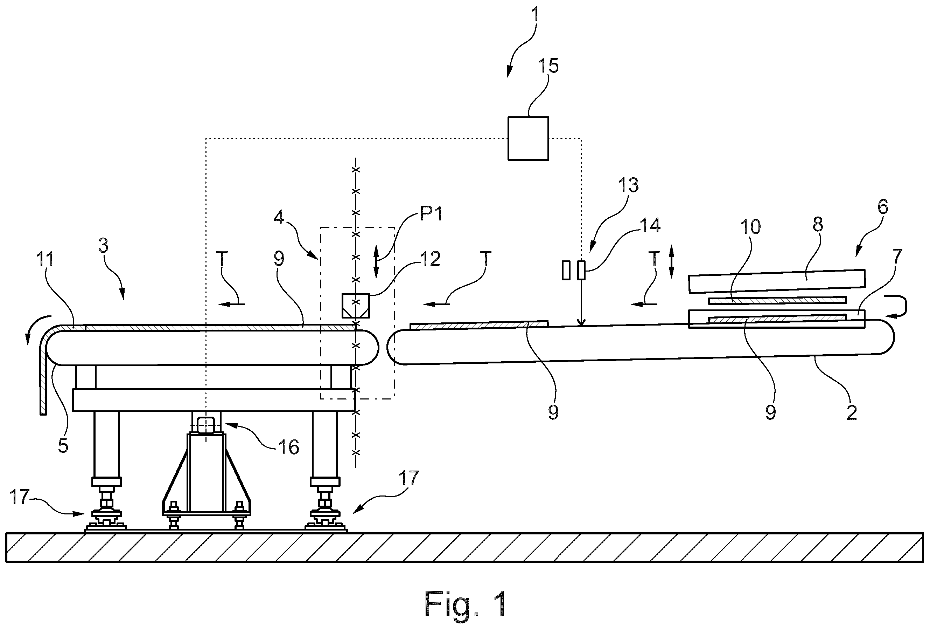

Figur 1 zeigt eine erfindungsgemäße Spleißeinrichtung 1 umfassend ein um Rollen geführtes und mittels eines Antriebsmotors umlaufend angetriebenes Förderband 2 sowie eine Spleißvorrichtung 3 umfassend eine Spleißeinheit 4 zum Verspleißen einzelner Bandabschnitte. Die Spleißvorrichtung 3 umfasst desweiteren ein Transportband 5, auf dem das gespleißte, Endlosband aufliegt und abtransportiert wird.

Dem Förderband 2 vorgeschaltet ist eine Schneideinrichtung 6 umfassend ein Untermesser 7 und ein Obermesser 8, mittels dem einzelne Bandabschnitte 9 von einem Endlosband 10 geschnitten werden. Die einzelnen Bandabschnitte 9 werden auf dem Förderband 2 aufgenommen und in der Transportrichtung T zur Spleißvorrichtung 3 transportiert. Das Förderband 2 ist bevorzugt als umlaufendes Band ausgeführt.

Die einzelnen, geschnittenen Bandabschnitte 9 werden zur Spleißvorrichtung 3 gefördert, auf der ein gespleißtes Band 11, dessen Ende von einem zuvor angespleißten Bandabschnitt 9 gebildet wird, ruht. An das freie Ende des Bands 11 wird mittels der Spleißeinheit 4 das vorlaufende Ende des über das Förderband 2 herangeförderten Bandabschnitts 9 angespleißt, wozu eine oberes Spleißwerkzeug 12, wie durch den Doppelpfeil P1 dargestellt, vertikal bewegt wird, worüber die beiden Bandabschnittkanten miteinander verspleißt werden. Die Position einer Längskante eines herangeförderten Bandabschnitt 9 wird mittels einer ersten Sensorvorrichtung 13 umfassend einen ersten Sensor 14 erfasst, wobei die Informationen einer Steuerungseinrichtung 15 gegeben werden, die unter Berücksichtigung von Informationen zur Position der Längskante des endlosen Bands 11 einen etwaigen Versatz zwischen den beiden Längskanten ermittelt. Wird ein solcher Versatz ermittelt, so steuert die Steuerungseinrichtungen 15 ein Antriebsmittel 16 an, mittels welchem die Spleißvorrichtung 3 in einer Richtung senkrecht zur Förderrichtung T verschoben werden kann, wozu die Spleißeinrichtung 3 über entsprechende Linearführungsmittel 17 verschiebbar gelagert ist.

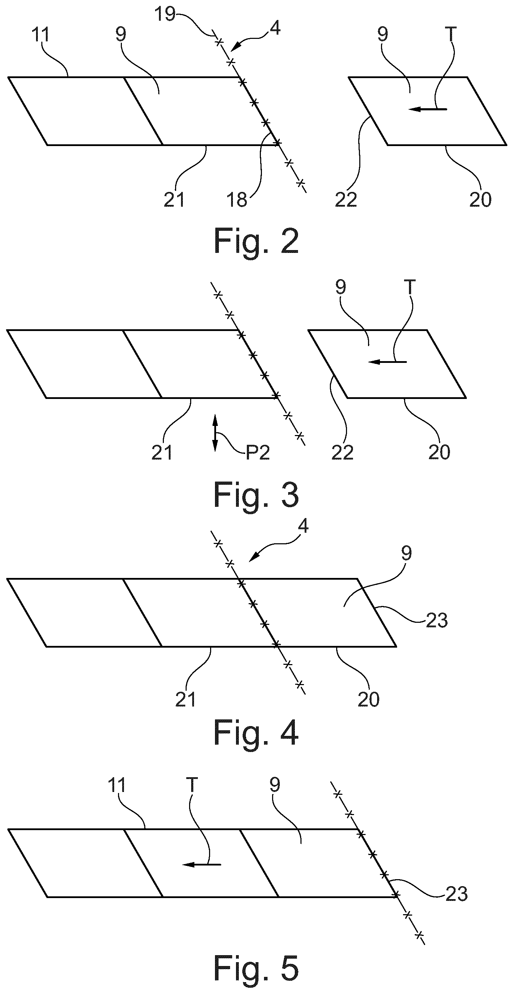

Die Fig. 2 - 5 zeigen schematisch den Transport- und Spleißvorgang. Gezeigt ist ein herangeförderter Bandstreifen 9, der auf dem Förderband 2 aufliegt und in Transportrichtung T transportiert wird. Gezeigt ist auch das endlose gespleißte Band 11 mit seinem zuletzt angespleißten Bandstreifen 9, dessen freie, nachlaufenden Kante 18 unmittelbar in der Spleißeinheit 4, also unterhalb des nicht näher gezeigten Spleißwerkzeug 12 liegt. Die Spleißlinie 19 ist schematisch dargestellt.

Im Zeitpunkt gemäß Fig. 2 wird über die erste Sensorvorrichtung 13, also den ersten Sensor 14 die Position einer Längskante 20 des herangeförderten Bandstreifens 9 erfasst. Die Steuerungseinrichtung 15 mittelt einen etwaigen Versatz zur Längskante 21 des zuletzt gespleißten Bandstreifens 9, wobei diese Längskante 21 der Längskante des gespleißten Bands 11 entspricht.

Mit zunehmender Förderung gelangt der herangeförderte Bandstreifen 9 immer näher zur Spleißvorrichtung 3, die, wie durch den Doppelpfeil P2 dargestellt, für einen Ausgleich eines ermittelten Versatzes quer zur Förderrichtung T verschoben wird, bis die Längskanten 20 und 21 miteinander fluchten. D. h., dass die Längskante 21 in ihrer seitlichen Lage an die Position der Längskante 20 angepasst wird. Die gesamte Spleißvorrichtung 3 wird hierbei verschoben, da diese wie beschrieben über die Linearführungsmittel 17 quer verschiebbar gelagert ist.

In der Situation gemäß Fig. 4 ist einerseits die Spleißvorrichtung 3 komplett ausgerichtet, d. h., dass die beiden Längskanten 20, 21 exakt miteinander fluchten. Andererseits ist der herangeförderte Bandstreifen 9 in seiner Endposition angekommen, er liegt mit seiner vorlaufenden Kante 22 in der Spleißeinheit 4 und kann mit seiner Kante 22 an Kante 21 angespleißt werden.

Nach erfolgtem Spleißen wird das gespleißte Band 11 um die Länge des an gespleißten Bandstreifens 9 über das Transportband 5 weitertransportiert, bis die nachlaufende Kante 23 des soeben angespleißten Bandstreifens 9 in der Spleißeinheit 4 positioniert ist, woraufhin diese Förderbewegung gestoppt wird. Sodann beginnt der nächste Zyklus wieder mit Fig. 2, d. h., dass ein neuer Bandstreifen 9, der zuvor geschnitten wurde, herangefördert wird.

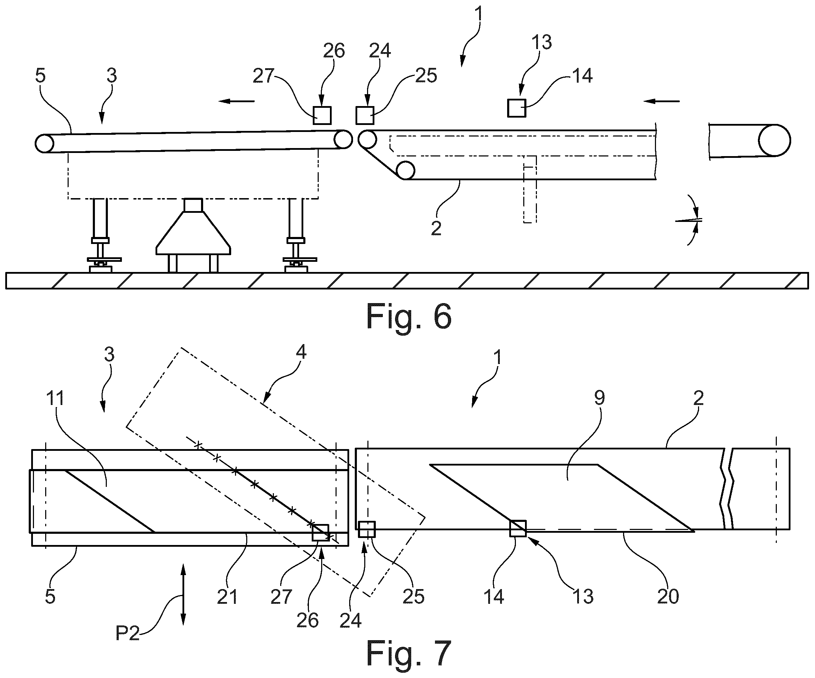

Fig. 6 zeigt eine Seitenansicht der erfindungsgemäßen Spleißeinrichtung 1. Gezeigt ist das Förderband 2 sowie die Spleißvorrichtung 3 mit ihrem Transportband 5. Eine Aufsicht auf die Spleißeinrichtung aus Fig. 6 zeigt Fig. 7, wobei hier zusätzlich ein herangeförderter Bandstreifen 9 sowie das gespleißte Band 11 als auch die Spleißeinheit 4 gezeigt sind. Die Figur zeigt auch, dass das Förderband 2 etwas schmäler als das Transportband 5 ist.

Dem Förderband 2 zugeordnet und an einer Längsseite desselben positioniert ist die erste Sensorvorrichtung 13 umfassend einen ersten Sensor 14, mittels der bzw. dem die Position der Längskante 20 des herangeförderten Bandstreifens 9 erfasst wird. Diese liegt geringfügig seitlich außerhalb des Förderbands 2.

Optional vorgesehen ist eine zweite Sensorvorrichtung 24 umfassend einen zweiten Sensor 25, mittels der bzw. dem ebenfalls die Position der Längskante 20 des herangeförderten Bandstreifens 9 erfasst wird. Während die erste Sensorvorrichtung 13 etwas weiter vom Ende des Förderbands 2 beabstandet ist, ist die zweite Sensorvorrichtung 24 eng benachbart zum Ende des Förderbands 2 angeordnet. Während also mittels der ersten Sensorvorrichtung 13 die seitliche Position der Längskante 20 an einer Stelle, die noch etwas von der Übergabestelle des Bandstreifens 9 vom Förderband 2 auf das Transportband 5 beabstandet ist, erfasst wird, befindet sich die zweite Sensorvorrichtung 24 unmittelbar im Übergabebereich.

Weiterhin vorgesehen ist, ebenfalls optional, eine weitere Sensorvorrichtung 26 umfassend einen weiteren Sensor 27, mit der bzw. dem die Position der Längskante 21 des gespleißten Bands 11 respektive des zuletzt angespleißten Bandabschnitts 9 bestimmt wird. Diese weitere Sensorvorrichtung 26 ist folglich an der Spleißvorrichtung 3 angeordnet, während die erste und die zweite Sensorvorrichtung 13, 24 an dem Förderband 2 respektive einem dort vorgesehenen Gestell oder dergleichen angeordnet ist.

Alle Sensorvorrichtungen 13, 24, 26 respektive deren Sensoren in 14, 25, 27 umfassen oder sind optische Sensoren, insbesondere Zeilensensoren, alternativ können auch Kameras oder Lasersensoren verwendet werden. Die jeweiligen Sensoren erlauben eine exakte Bestimmung der Position der jeweiligen Längskante 20, 21 in ihrer seitlichen Lage, sodass die Steuerungseinrichtung 15 in der Lage ist, einen etwaigen Versatz zu ermitteln.

Dabei ist grundsätzlich nur die erste Sensorvorrichtung 13 bereits ausreichend, eine bestmögliche Versatzkorrektur durch seitliches Verschieben der Spleißvorrichtung 3 zu erwirken, nachdem die Position der Längskante 21 des gespleißten Bands 11 bekannt ist, da sie ja letztlich mittels der ersten Sensorvorrichtung 13 zu einem früheren Zeitpunkt, nämlich als der zuletzt an gespleißte Bandstreifen 9 noch auf der Förderband 2 war, erfasst wurde und die Spleißvorrichtung 3 bezüglich dieser Kantenposition ausgerichtet wurde. Gleichwohl ist auch die Verwendung der zweiten Sensorvorrichtung 24 zweckmäßig, als hierdurch zu einem späteren Zeitpunkt quasi eine Nachkontrolle der Kantenposition und damit der ersten Ausrichtung erfolgen kann. Unmittelbar nach Erfassen der Kantenposition über die erste Sensorvorrichtung 14 kann demzufolge die Steuerungseinrichtung 15, bei Ermittlung eines etwaigen Versatzes, die Spleißvorrichtung 3 ausrichten und über die Antriebsmittel 16 quer verschieben, sodass bezogen auf diesen Zeitpunkt die Längskanten 20, 21 miteinander fluchten. Eine Kantenpositionskontrolle kann über die zweite Sensorvorrichtung 24 erfolgen, die nochmals die Position der Längskante 20 des herangeförderten Streifens 9 erfasst. Sofern diese Positionsinformation mit der zuvor über die erste Sensorvorrichtung 13 erfassten Positionsinformation zusammenfällt, ist keine weitere Endkorrektur erforderlich. Fallen diese jedoch marginal auseinander, so kann die Steuerungseinrichtung 15 einen etwaigen marginalen Versatz erneut ermitteln und unmittelbar die Spleißvorrichtung 3 über die Antriebsmittel 16 verschieben, um auf diesen Versatz auch noch auszugleichen.

Wie beschrieben, ist die Position der Längskante 21 dem Grunde nach bekannt. Um jedoch auch diese Positionsinformation nochmals zu überprüfen, kann die weitere Sensorvorrichtung 26 mit einem weiteren Sensor 27 vorgesehen sein, die bzw. der diese Position nochmals erfasst, wobei auch diese Information seitens der Steuerungseinrichtungen 15 berücksichtigt werden kann.

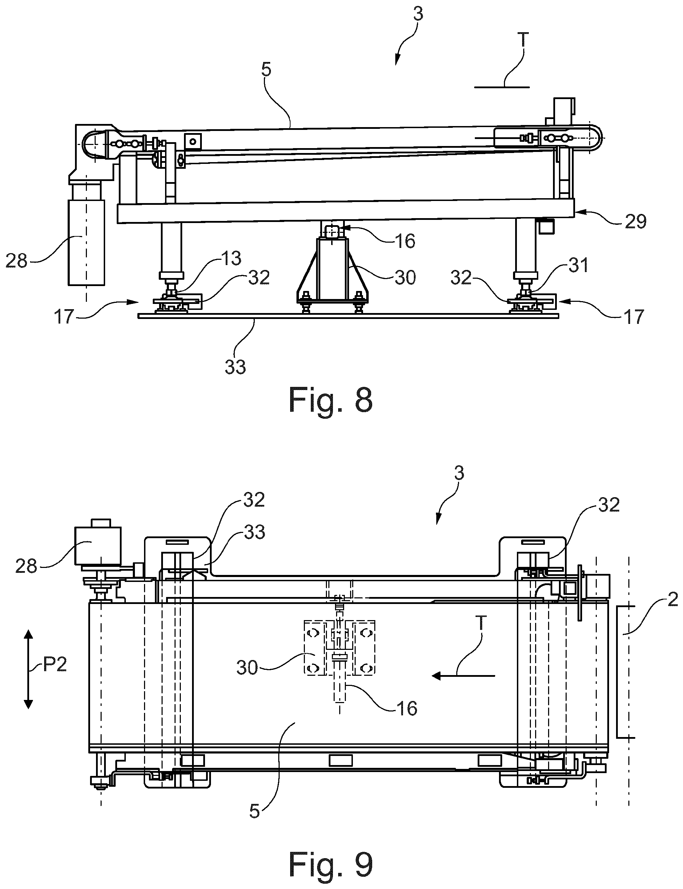

Fig. 8 zeigt eine detailliertere Seitenansicht der Spleißvorrichtung 3, während Fig. 9 eine Aufsicht auf die Spleißvorrichtung 3 aus Fig. 8 zeigt. Gezeigt ist das umlaufende Transportband 5, das über eine geeignete Rollenführungen geführt ist und mittels eines Antriebsmotors 28 umlaufend angetrieben werden kann, sodass sich das Obertrum in Richtung der Transportrichtung T bewegt. Die Spleißvorrichtung 3 umfasst ein Rahmengestell 29, an dem das Transportband 5 gelagert ist, wobei das Rahmengestell 29 über die beiden Linearführungen 17 linear bewegbar ist und quer zur Transportrichtung T verschoben werden kann, wie bereits beschrieben. Hierzu dient das Antriebsmittel 16, bei dem es sich vorzugsweise um einen Antriebsmotor und insbesondere einen Servomotor handelt, das bzw. der auf einer separaten Trägerkonsole 30 angeordnet ist und mit dem Rahmengestell 29 gekoppelt ist.

Die Linearführungsmittel 17 umfassen am Rahmengestell 29 angeordnete Rollen 31, die auf oder in entsprechenden Rollenführungen 32, die vorliegend auf einer Lagerplatte 33 angeordnet sind, die wiederum bodenseitig fest montiert ist, laufen und geführt sind. Über das Antriebsmittel 16 ist eine entsprechende Querverschiebung, wie durch den Doppelpfeil P2 dargestellt, möglich, sodass die Spleißvorrichtung 3 quer zur Transportrichtung T verstellt werden kann und demzufolge auch bezüglich des Endes des Förderbands 2, das in Fig. 9 noch rechts angedeutet ist. Hierüber kann der erforderliche Versatzausgleich vorgenommen werden.

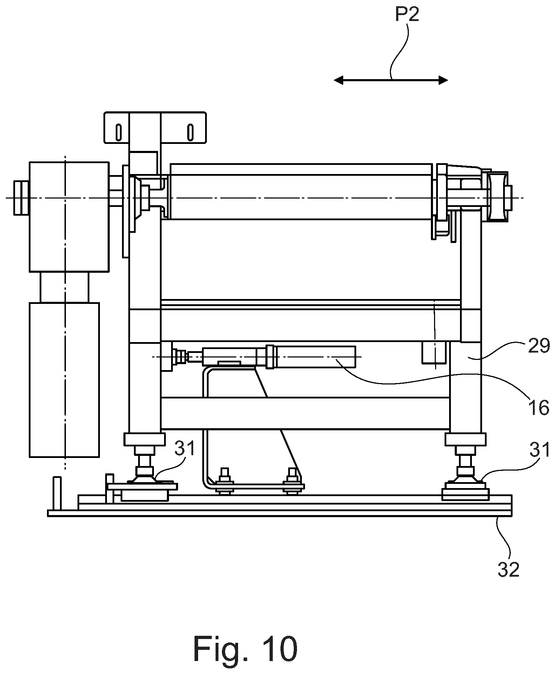

Eine entsprechende Vorderseitenansicht, gesehen entgegen der Förderrichtung T, ist in Fig. 10 gezeigt. Das Rahmengestell 29 ist ersichtlich, gesehenen in Querrichtung, über zwei separate Anordnungen von Rollen 31 auf der schienenartigen Rollenführung 32 geführt, sodass sich insgesamt quasi eine 4-Punkt-Auflage und -Führung ergibt.

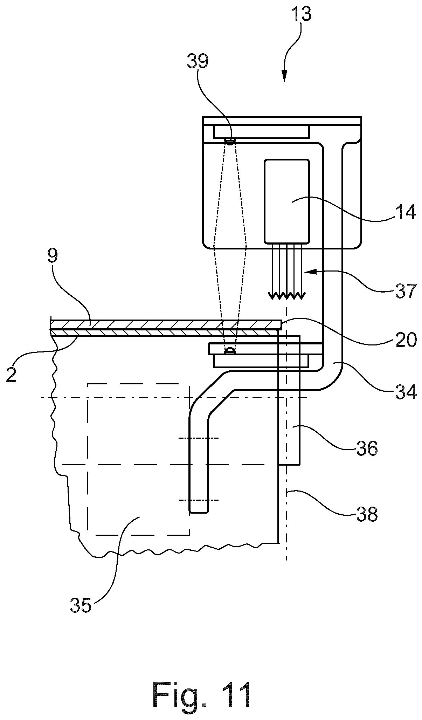

Fig. 11 zeigt eine Prinzipdarstellung der ersten Sensorvorrichtung 13. Diese ist über eine entsprechende Halterung 34 an einem Rahmengestell 35 des Förderbands 2 positionsfest angeordnet. Sie befindet sich oberhalb des Förderbands 2, das über an beiden Seiten vorgesehene Umlenkrollen 36 geführt ist, und auf dem ein geschnittener Bandstreifen 9 liegt. Dieser ragt im gezeigten Beispiel mit seiner Längskante 20 geringfügig über die Kante des Förderbands 2 hinaus, was aber nicht erforderlich ist, vielmehr kann der Bandstreifen auch bündig mit der Kante abschließen oder weiter nach innen liegen.

Die erste Sensorvorrichtung 13 befindet sich oberhalb dieses Längskantenbereichs. Sie umfasst einerseits den ersten Sensor 14, der derart ausgerichtet ist, dass sein Meßfeld 37, wie durch die Pfeile angedeutet, jedenfalls die Längskante 20 erfasst. D. h., dass über die gelieferten Sensorsignale des Sensors 14, seien es Abtast- oder Reflexionssignale oder aufgenommene Bilder, exakt die Position der Längskante erfasst und bezüglich einer hier gezeigten Referenzkante 38 bestimmt werden kann, was vorzugsweise seitens der Steuerungseinrichtung15 erfolgt. Diese Referenzkante 38 ist systemseitig definiert und respektive über die erste Sensorvorrichtung 13 festgelegt.

Gezeigt ist ferner ein Sensor 39, der in der ersten Sensorvorrichtung 13 integriert ist, und über den die vorlaufende Kante 22 des Bandstreifens 9 erfasst wird. Die vorlaufende Kante 22 wird über den Sensor 39 zeitlich etwas vor der Längskante 20 erfasst. Sobald die, wie die Fig. 2 - 5 zeigen, schräg verlaufende Kante 22 erfasst wird, und die Steuerungseinrichtungen 15 dieses Signal erhält, kann diese einen etwaigen anstehenden Ausrichtvorgang einleiten. Hierzu kann beispielsweise das Antriebsmittel 16 bereits entsprechend vorbereitend angesteuert werden o. ä. Sobald dann über die erste Sensorvorrichtung 13 die Längskante 20 erfasst wird und die Steuerungseinrichtungen 15 einen etwaigen Versatz zur Längskante 21 ermittelt, kann dann die Steuerungseinrichtung 15 unmittelbar die Antriebsmittel 16 ansteuern und die Spleißvorrichtung 3 zum Ausgleich des Versatzes quer verschieben. Hierüber kann eine Vorsteuerung erreicht werden.

Bei weiterer Förderung des Bandstreifens 9 gelangte dieser in den Bereich der zweiten Sensorvorrichtung 24, die nochmals die Kante 20 erfasst. Auch diese Sensorvorrichtung 24 weist einen entsprechenden zweiten Sensor 25 auf, vorzugsweise den gleichen Sensor wie die Sensorvorrichtung 13, wobei die erfasste Kantenposition wiederum seitens der Steuerungseinrichtung 15 ausgewertet wird und, trotz bereits erfolgtem Ausgleich, ein etwaiger noch verbliebener, marginaler Versatz ermittelt werden kann. Ist ein solcher gegeben, steuert die Steuerungseinrichtung 15 erneut die Antriebsmittel 16 an, um diesen umgehend auszugleichen.

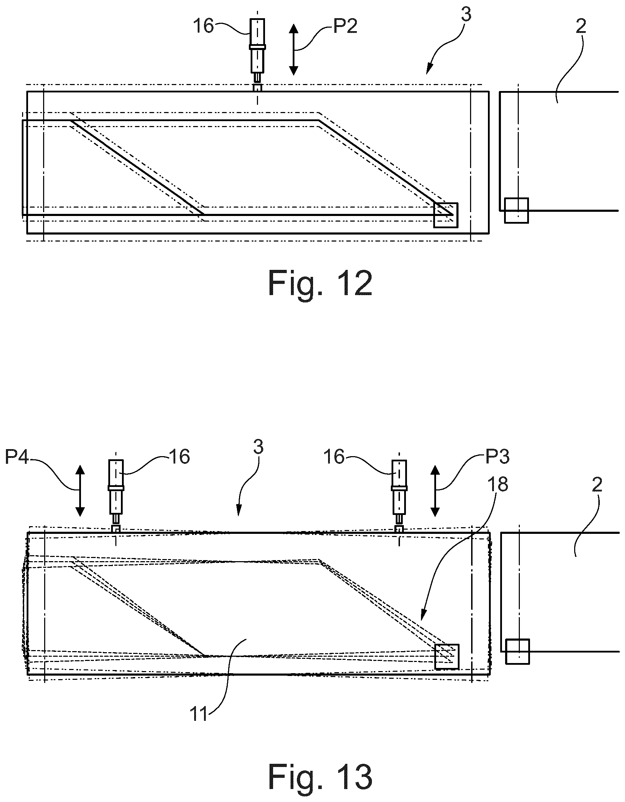

Fig. 12 zeigt eine Prinzipdarstellung in Form einer Aufsicht auf die Spleißvorrichtung 3, bei der nur ein Antriebsmittel 16, also nur ein Antriebsmotor vorgesehen ist. Diese ist bevorzugt längsmittig, gesehen in Förderrichtung, zum Rahmengestell 29 angeordnet. Bei einer solchen Ausgestaltung mit nur einem Antriebsmittel 16, also nur einem Stellantrieb wird die Spleißvorrichtung 3 über beide Linearführungen synchron und homogen verschoben, wie durch den Doppelpfeil P2 angedeutet.

Fig. 13 zeigt hingegen eine Variante, bei der zwei separate Antriebsmittel 16 vorgesehen sind, also zwei separate Antriebsmotore bzw. Servomotore, die separat angesteuert werden können. Sie sind bezogen auf die Längsmitte des Rahmengestells 29 versetzt angeordnet. Dies erlaubt es, wenn beide synchron angesteuert werden, die Spleißvorrichtung 3 synchron über beide Linearführungen 17 zu verschieben. Alternativ ist es auch denkbar, hierüber eine marginale Schwenkbewegung zu realisieren, wie in Fig. 13 dargestellt. Hierzu werden die beiden Antriebsmittel 16 respektive Antriebsmotore beispielsweise geringfügig entgegengesetzt angesteuert, sodass das eine Antriebsmittel 16 schiebt, während das andere Antriebsmittel 16 zieht, oder es sind unterschiedliche lange Stellwege gegeben etc. Dies ist über die separaten Doppelpfeile P3, P4 dargestellt. In jedem Fall kann hierüber eine gewisse Verschwenkung respektive Verkippung der Spleißvorrichtung 3 bezogen auf die Förderrichtung T des Förderbands 2, das auch hier nur angedeutet ist, erreicht werden, wie in Fig. 13 angedeutet ist. Hierüber kann erreicht werden, dass die Ausrichtung der nachlaufenden Kante 18 des gespleißten Bands 11 marginal verkippt bzw. verschwenkt wird, wie in Fig. 13 angedeutet ist. Hierdurch kann die Form des sich unmittelbar vor dem Spleißen, wenn beide zu verspleißenden Bandabschnitte 9 in Ruhe sind, in der Spleißeinheit 4 ergebende Spalt zwischen den beiden Kanten 18, 22 eingestellt werden. Dieser sollte sich bevorzugt geringfügig von einem Ende zum anderen erweitern, d. h., dass im Bereich der nachlaufenden Spitze des Bands 11 die Kante 22 des herangeförderten Bandstreifens 9 anliegt, und sich ausgehend von dort der Spalt geringfügig zum anderen Kantenende erweitert. Diese minimale, nur wenige Bogenminuten betragende Verkippung oder Verschwenkung kann über die beiden Linearführungen 17 ermöglicht werden, die eine gewisse Toleranz diesbezüglich aufweisen können, sodass über die beiden Antriebsmittel 16 die gewünschte Einstellung ermöglicht wird. Der Verlauf der Kanten 18, 22 kann über die erste Sensorvorrichtung 13 bzw. deren Sensor 14 erfasst werden, da diese Kanten durch den Erfassungsbereich des Sensors 14 laufen und die Steuerungseinrichtung 15 den Kantenverlauf daraus ermitteln kann.

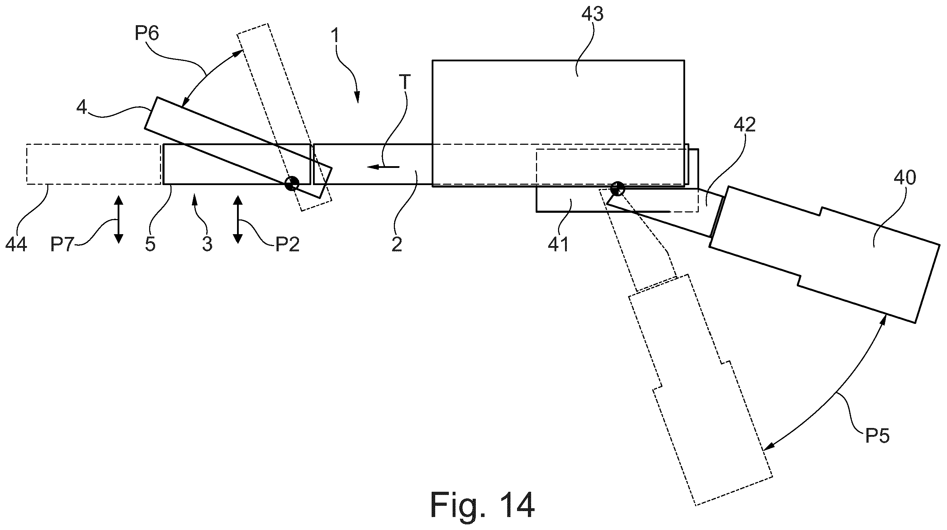

Fig. 14 zeigt schließlich ein Layout einer Anlage zur Herstellung eines solchen Endlosbands, das nach seiner Herstellung weiterverarbeitet wird. Gezeigt ist eine Abwickelstation 40, aus der das zu bearbeitende Cordband bezogen wird. In der Abwickelstation 40 wird in eine geeignete Aufnahme die zu verarbeitende Rolle aus dem Cordband eingehängt und ausgewickelt. Die Abwickelstation 40 ist, wie durch den Doppelpfeil P5 gezeigt, verschwenkbar, um unterschiedliche Schnittwinkel zu realisieren.

Der Abwickelstation 40 folgt eine Schneideinrichtung 41, in der mittels geeigneter Messer die Bandabschnitte 9 geschnitten werden. Beispielsweise werden hierzu Schlagmesser verwendet, umfassend ein feststehendes Untermesser und ein vertikal bewegliches Obermesser. Um das von der Abwickelstation 40 zugeführte Cordband, das über eine Transporteinrichtung 42 zugeführt, durch die Schneideinrichtung 41 zur fördern, ist eine Greifeinrichtung 43 vorgesehen, die die vorlaufende Kante des Cordbands greift und durch die Schneideinrichtung 41 zieht.

Der Schneideinrichtung 41 nachgeschaltet ist die erfindungsgemäße Spleißeinrichtung 1. Der geschnittene Bandstreifen 9 liegt unmittelbar nach dem Schnitt auf dem Förderband 2 auf, über das der Bandstreifen 9 in Förderrichtung T zur Spleißvorrichtung 3 gefördert wird, die wie beschrieben und durch den Doppelpfeil P2 angedeutet grundsätzlich quer verschiebbar ist. Dargestellt ist auch die Verschwenkbarkeit der Spleißeinheit 4, wie durch den Doppelpfeil P6 angedeutet, um sich unterschiedlichen Schnittwinkeln anpassen zu können. Das auf dem Transportband 5 befindliche gespleißte Band 11 kann von dem Transportband 5 auf ein optionales weiteres Transportband 44 gegeben werden, das ebenfalls Teil der Spleißeinrichtung 1 ist und zusammen mit der Spleißvorrichtung 3 quer verschiebbar ist, wie durch den Doppelpfeil P7 dargestellt. Ein solches weiteres Transportband 44 kann vorgesehen sein, muss aber nicht. Über eine nicht näher gezeigte Aufwickelstation wird das endlose Band 11 sodann aufgewickelt, wobei der Aufwickeltstation gegebenenfalls ein Slitter, über den das Endlosband in zwei Teilbänder getrennt wird, vorgeschaltet sein kann, ebenso wie ein etwaiges Reparaturband oder eine Belegevorrichtung.

## Patentansprüche

1. Spleißeinrichtung zum Spleißen von Bandstreifen (9), insbesondere klebrigen Cordbandstreifen, umfassend
- ein einen ersten Bandabschnitt (9) transportierendes Förderband (2),
- eine Spleißvorrichtung (3) umfassend eine Spleißeinheit (4), in welcher eine vorlaufende Kante (22) eines über das Förderband (2) herangeförderten Bandstreifens (9) mit einer nachlaufenden Kante (18) eines zuvor gespleißten Bandstreifens (9) zur Bildung eines gespleißten Bands (11) verspleißt wird, sowie umfassend ein Transportband (5) zum Transportieren des gespleißten Bands,
- sowie eine Sensoreinrichtung zur Erfassung einer Position zumindest des herangeförderten Bandstreifens (9), basierend auf welcher der herangeförderte Bandstreifen (9) und das gespleißte Band (11) zueinander mittels einer Ausrichteinrichtung ausrichtbar sind,
**dadurch gekennzeichnet, dass** die Sensoreinrichtung eine an einer Längsposition des Förderbands (2) angeordnete erste Sensorvorrichtung (13), die zur Erfassung der Position einer Längskante (20) des Bandstreifens (9) eingerichtet ist, aufweist, wobei eine Steuerungseinrichtung (15) vorgesehen ist, die zur Ermittlung eines lateralen Versatzes der erfassten Position der Längskante (20) mit der Position der Längskante (21) des gespleißten Bands (11) eingerichtet ist, und über die bei Ermittlung eines Versatzes ein Antriebsmittel (16) der quer zur Förderrichtung des Förderbands (2) verschiebbar gelagerten Spleißvorrichtung (3) zur fluchtenden Ausrichtung der beiden Längskanten (20, 21) ansteuerbar ist.

2. Spleißeinrichtung nach Anspruch 1, **dadurch gekennzeichnet, dass** die Sensoreinrichtung eine zweite Sensorvorrichtung (24) umfasst, die an einer der ersten Sensorvorrichtung (13) in Förderrichtung nachgeschalteten Längsposition des Förderbands (2) benachbart zum Ende des Förderbands (2) angeordnet ist und die ebenfalls zur Erfassung der Position einer Längskante (20) des Bandstreifens (9) eingerichtet ist, wobei die Steuerungseinrichtung (15) zur Ermittlung eines lateralen Versatzes der über die zweite Sensorvorrichtung (24) erfassten Position der Längskante (20) mit der Position der Längskante des gespleißten Bands (11) eingerichtet und zur Ansteuerung des Antriebsmittels (16) bei Ermittlung eines Versatzes eingerichtet ist.

3. Spleißeinrichtung nach Anspruch 1 oder 2, **dadurch gekennzeichnet, dass** eine weitere Sensoreinrichtung zur Erfassung einer Position des gespleißten Bandstreifens (9) vorgesehen ist, die eine an einer Längsposition des Transportbands angeordnete weitere Sensorvorrichtung (26), die zur Erfassung der Position einer Längskante (21) des gespleißten Bandstreifens (9) eingerichtet ist, umfasst, wobei die Steuerungseinrichtung (15) zur Ermittlung des lateralen Versatzes unter Berücksichtigung der erfassten Position der Längskante (21) des gespleißten Bandstreifens (9) eingerichtet ist.

4. Spleißeinrichtung nach einem der vorangehenden Ansprüche, **dadurch gekennzeichnet, dass** die erste und/oder die zweite und/oder die weitere Sensorvorrichtung (13, 24, 26) zur Erfassung der jeweiligen Längskantenposition wenigstens einen optischen Sensor in Form eines Zeilensensors oder einer Kamera oder eines Lasersensor umfasst.

5. Spleißeinrichtung nach einem der vorangehenden Ansprüche, **dadurch gekennzeichnet, dass** die erste Sensorvorrichtung (13) einen Sensor (39) zur Erfassung der vorlaufenden Kante (22) des herangeförderten Bandstreifens (9) umfasst.

6. Spleißeinrichtung nach einem der vorangehenden Ansprüche, **dadurch gekennzeichnet, dass** die Spleißvorrichtung (3) über Linearführungsmittel (17) verschiebbar gelagert ist.

7. Spleißeinrichtung nach Anspruch 6, **dadurch gekennzeichnet, dass** die Linearführungsmittel (17) an der Spleißvorrichtung (3) vorgesehene Rollen (31), die in oder an positionsfesten Rollenführungen (32) laufen, umfassen.

8. Spleißeinrichtung nach Anspruch 7, **dadurch gekennzeichnet, dass** eine positionsfeste Lagerplatte (33) vorgesehen ist, an der die Rollenführungen (32) vorgesehen sind, oder dass die Rollenführungen (32) bodenseitig befestigt sind.

9. Spleißeinrichtung nach einem der vorangehenden Ansprüche, **dadurch gekennzeichnet, dass** die Spleißvorrichtung (3) zusätzlich um einen Winkel von +/-3°, insbesondere von maximal +/- 2° und vorzugsweise von maximal +/- 1° aus einer mit der Förderrichtung fluchtenden Grundposition verschwenkbar ist.

10. Spleißeinrichtung nach Anspruch 9 und einem der Ansprüche 6 bis 8, **dadurch gekennzeichnet, dass** die Linearführungsmittel (17) zur Ermöglichung der Verschwenkung eingerichtet sind.

11. Spleißeinrichtung nach einem der vorangehenden Ansprüche, **dadurch gekennzeichnet, dass** die Antriebsmittel (16) einen Antriebsmotor umfassen, der mit einem Rahmengestell (29) der Spleißvorrichtung (3) verbunden ist.

12. Spleißeinrichtung nach einem der Ansprüche 1 bis 10, **dadurch gekennzeichnet, dass** die Antriebsmittel (16) zwei separat ansteuerbare Antriebsmotore umfassen, die beide mit einem Rahmengestell (29) der Spleißvorrichtung (3) verbunden sind, wobei beide Antriebsmotore in Förderrichtung versetzt zueinander angeordnet sind.

13. Verfahren zum Betrieb einer Spleißeinrichtung (1) zum Spleißen von Bandstreifen (9), insbesondere klebrigen Cordbandstreifen, wobei die Spleißeinrichtung (1) umfasst:
- ein einen ersten Bandabschnitt (9) transportierendes Förderband (2),
- eine Spleißvorrichtung (3) umfassend eine Spleißeinheit (4), in welcher eine vorlaufende Kante (22) eines über das Förderband (2) herangeförderten Bandstreifens (9) mit einer nachlaufenden Kante (18) eines zuvor gespleißten Bandstreifens (9) zur Bildung eines gespleißten Bands (11) verspleißt wird, sowie umfassend ein Transportband (5) zum Transportieren des gespleißten Bands (11),
- sowie eine Sensoreinrichtung zur Erfassung einer Position zumindest des herangeförderten Bandstreifens (9), worauf basierend der herangeförderte Bandstreifen (9) und das gespleißte Band (11) zueinander mittels einer Ausrichteinrichtung ausgerichtet wird,
**dadurch gekennzeichnet, dass** die Sensoreinrichtung eine an einer Längsposition des Förderbands (2) angeordnete erste Sensorvorrichtung (13) aufweist, mittels der die Position einer Längskante (20) des Bandstreifens (9) erfasst wird, wobei mittels einer Steuerungseinrichtung (15) ein lateraler Versatzes der erfassten Position der Längskante (20) mit der Position der Längskante (21) des gespleißten Bands (11) ermittelt wird und über die Steuerungseinrichtung (15) bei Ermittlung eines Versatzes ein Antriebsmittel (16) der quer zur Förderrichtung des Förderbands (2) verschiebbar gelagerten Spleißvorrichtung (3) zur fluchtenden Ausrichtung der beiden Längskanten (20, 21) angesteuert und die Spleißvorrichtung (3) zum Ausgleich des Versatzes verschoben wird.

14. Verfahren nach Anspruch 13, **dadurch gekennzeichnet, dass** mittels einer zweiten Sensorvorrichtung (24), die an einer der ersten Sensorvorrichtung (13) in Förderrichtung nachgeschalteten Längsposition des Förderbands (2) benachbart zum Ende des Förderbands (2) angeordnet ist, ebenfalls die Position der Längskante (20) des Bandstreifens (9) erfasst wird, wobei mittels der Steuerungseinrichtung (15) der laterale Versatz anhand der über die zweite Sensorvorrichtung (24) erfassten Position der Längskante (20) ermittelt wird.

15. Verfahren nach Anspruch 13 oder 14, **dadurch gekennzeichnet, dass** mittels einer weiteren Sensorvorrichtung (26), die an einer Längsposition des Transportbands (5) angeordnet ist, eine Position des gespleißten Bands (11) erfasst wird, wobei die Steuerungseinrichtung (15) den lateralen Versatz unter Berücksichtigung der erfassten Position der Längskante (21) des gespleißten Bands (11) ermittelt.

16. Verfahren nach einem der Ansprüche 13 bis 15, **dadurch gekennzeichnet, dass** zur Erfassung der jeweiligen Längskantenposition wenigstens ein optischer Sensor (14, 25, 27) in Form eines Zeilensensors oder einer Kamera oder eines Lasersensor verwendet wird.

17. Verfahren nach einem der Ansprüche 13 bis 16, **dadurch gekennzeichnet, dass** mittels eines Sensors (39) der ersten Sensorvorrichtung (13) die vorlaufende Kante (22) des herangeförderten Bandstreifens (9) erfasst wird.

18. Verfahren nach einem der Ansprüche 13 bis 17, **dadurch gekennzeichnet, dass** zum Ausgleich eines Versatzes die Spleißvorrichtung (3) linear verschoben und/oder um einen Winkel von +/-3°, insbesondere von maximal +/- 2° und vorzugsweise von maximal +/- 1° aus einer mit der Förderrichtung fluchtenden Grundposition verschwenkt wird.

19. Verfahren nach einem der Ansprüche 13 bis 18, **dadurch gekennzeichnet, dass** als Antriebsmittel (16) ein oder zwei separat ansteuerbare Antriebsmotore, insbesondere Servomotore verwendet werden.
